Europäisches Patentamt

European Patent Office

Office européen des brevets

(11) Publication number: **0 161 750**
**B1**

(12) **EUROPEAN PATENT SPECIFICATION**

(45) Date of publication of patent specification: **12.10.88**

(51) Int. Cl.⁴: **F 15 B 15/10, B 25 J 9/14**

(21) Application number: **85301620.2**

(22) Date of filing: **08.03.85**

(54) Actuator.

(30) Priority: **25.04.84 JP 83435/84**

(43) Date of publication of application:
**21.11.85 Bulletin 85/47**

(45) Publication of the grant of the patent:
**12.10.88 Bulletin 88/41**

(84) Designated Contracting States:
**DE FR GB SE**

(56) References cited:
**EP-A-0 146 261**
**DE-C- 503 775**

(73) Proprietor: **Bridgestone Corporation**
**10-1, Kyobashi 1-Chome Chuo-Ku**
**Tokyo 104 (JP)**

(72) Inventor: **Sakaguchi, Yuji**
**2800-1, Ogawahigashi-Cho**
**Kodaira City Tokyo (JP)**
Inventor: **Takagi, Takeo**
**2800-1, Ogawahigashi-Cho**
**Kodaira City Tokyo (JP)**
Inventor: **Imamura, Yoshinori**
**2800-1, Ogawahigashi-Cho**
**Kodaira City Tokyo (JP)**

(74) Representative: **Whalley, Kevin et al**
**MARKS & CLERK 57/60 Lincoln's Inn Fields**
**London WC2A 3LS (GB)**

EP 0 161 750 B1

## Description

This invention relates to an actuator, operable by fluid pressure, particularly suitable for actuating means for pneumatically driven robots or manipulators. More particularly the invention relates to an elastic actuator contractible and extensible in response to inner pressure therein.

The present inventors have investigated and developed such actuators operated in response to inner pressure to operate, for example, arms and hands of robots. Such an actuator includes a thin-walled inner cylinder made of an elastomer such as rubber or the like and an extensible and contractible braided structure covering and reinforcing the inner cylinder. When the inner cylinder is supplied with pneumatic pressure, the inner cylinder expands to increase its diameter and simultaneously shortens its axial length to provide a suitable contracting force for arms or hands. In such an expanding operation of the inner cylinder, the braided structure is also expanded to increase its braided angles to what is called "angles of repose". Such a movement of the braided structure to change its braided angles is referred to herein as "pantograph movement", because the movement of rhombus patterns of elements forming the braided structure is like the movement of a pantograph.

Monofilaments, multifilaments and twisted cords have been used for braiding the reinforcing structure covering the thin-walled inner cylinder. It has been found that they have the following disadvantages in practical use.

### a) Monofilaments

As their rigidity is high, a braided structure made of monofilaments generally exhibits a high resistance to pantograph movements to obstruct the expansion of an inner cylinder. Moreover, due to the high rigidity of the monofilaments, hysteresis loss in the pantograph movement is large and intersections of the monofilaments forming a braided structure are likely to be shifted or displaced so as to change their braided patterns resulting in malfunction of an actuator.

### b) Multifilaments

A braided structure made of multifilaments exhibits much lower resistance to pantograph movements and smaller hysteresis loss than those of the monofilaments. However, there is still a risk of change in braided patterns due to displacement and separation of the multifilaments.

### c) Cords

A braided structure made of cords has the advantage that braided patterns are difficult to change. However, a braided structure made of cords tends to slacken, so that it is difficult to obtain an effective operating force, and hysteresis loss in the braided structure is large.

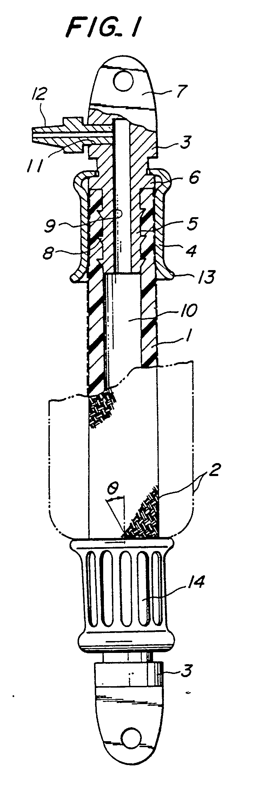

Such a hitherto used actuator will be explained in more detail by referring to Figure 1 of the accompanying drawings, which is a front elevation, partly in section, of a known actuator operated in response to inner pressure supplied therein. The actuator shown in Figure 1 comprises a thin-walled inner cylinder 1, a reinforcing braided structure 2 arranged on the outer surface of the cylinder 1, closure members 3 at both ends thereof and a clamp sleeve 4.

The inner cylinder 1 is preferably made of a rubber or rubber-like elastomer which is air-impermeable and flexible. However, other materials equivalent thereto, for example various kinds of plastics, may be used for this purpose.

The reinforcing braided structure 2 is somewhat similar to, for example, those conventional in pressure-resistant rubber hoses whose braided angles are approximate to what is called an angle of repose (54°44'). With the braided structure of the thin-walled inner cylinder, initial braided angles θ are preferably of the order of 20° in order to obtain the above mentioned angle of respose when the braided structure is expanded in diameter to the maximum value by inner pressure filled or supplied to the inner cylinder 1. In this case, conditions when used are determined so as to permit a strain under normally used conditions to be of the order of 0.3.

The tensile force-resistant reinforcing elements used in the reinforcing braided structure 2 are organic or inorganic high tensile fibers, preferably twisted or nontwisted filament bundles of, for example, glass fibers, very fine metal wires or aromatic polyamide fibers (trade name, KEVLAR).

Moreover, an outer sheath of a weatherproof or damage-protective film may be preferably provided on the braided structure 2.

Each closure member 3 comprises a nipple 5 adapted to be closely fitted in each end of the inner cylinder 1 preferably with an adhesive for sealing the inner cylinder from the atmosphere, a flange 6 for positioning the closure member relative to the inner cylinder, and an eye or yoke 7 having an aperture for a connecting pin (not shown). The nipple 5 is preferably provided on its outer periphery with annular protrusions 8 each having a steep taper surface toward the eye 7 and a gentle taper surface in the opposite direction for preventing the nipple 5 from being removed. One of the closure members 3 is formed at least on one side with a connecting aperture 11 communicating with an inner cavity 10 of the inner cylinder 1 through an aperture 9 formed in the nipple 5 in its axial direction. A fitting 12 is fitted in the connecting aperture 11 of the closure member 3.

Each clamp sleeve 4 is a cylindrical metal member engaging the flange 6 so as to cover the end outer circumference of the inner cylinder 1 and having a flare 13. The clamp sleeve 4 is partially pressed toward the nipple 5 in its radial direction to sealingly unite the closure member 3 with the inner cylinder 1. The reference numeral 14 in Figure 1 denotes axial depressions in the sleeve 4 caused by a calking tool in its formation process.

To the fitting 12 is connected an operating pressure source, for example an air compressor, through a line having a three-way valve (not shown).

When an operating pressure P is applied into the inner cavity 10 of the inner cylinder 1 through the fitting 12, the braided structure 2 is expanded from the position shown in solid lines to that shown in phantom lines in Figure 1 to enlarge the initial braided angles $\theta_0$ to $\theta_x$ or in the pantograph movement of the reinforcing cords of the braided structure 2 so as to cause an enlargement of the diameter of the inner cylinder 1 and a contraction in its axial direction caused thereby. The force F of the contraction is given by the following equation (1).

$$F=P\frac{\pi}{4}d^2\left(\frac{\sin\theta_x}{\sin\theta_0}\right)^2\left(\frac{2}{\tan^2\theta_x}-1\right)$$

or

$$P\frac{\pi}{4}d^2\frac{1}{\sin^2\theta_0}(3\cos^2\theta_x-1)$$

$$(1)$$

On the other hand, when the controlled pressure in the cavity 10 of the inner cylinder 1 is released through the three-way valve into the atmosphere, the inner cylinder 1 regain its length with decrease of the braided angle $\theta_x$.

It is therefore understood that such a pneumatic actuator can bring about bending and extending movement or articulate movements between two pivotally connected or articulated operating arms to which the eyes or yokes 7 of the closure members 3 of the pneumatic actuator are connected by means of pins.

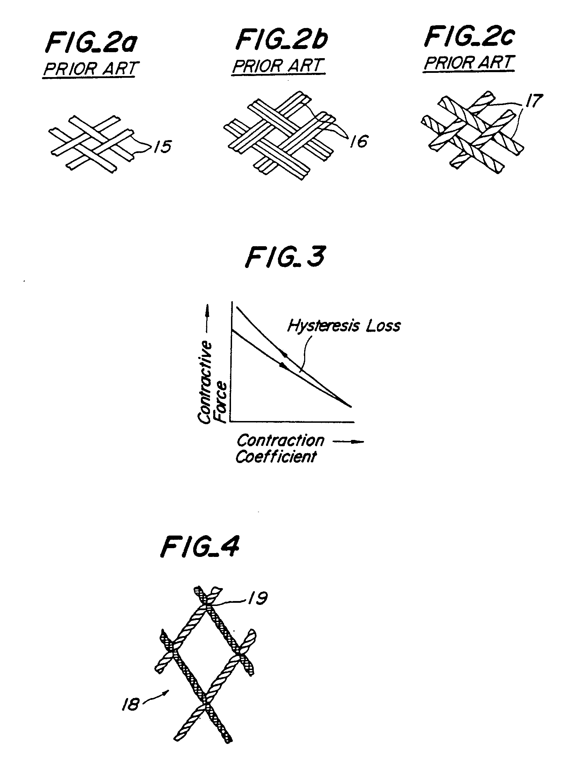

As above described, the hitherto used reinforcing elements for the braided structures are monofilaments 15 shown in Figure 2a, multifilaments 16 shown in Figure 2b, or twisted cords 17 shown in Figure 2c of the accompanying drawings. All these elements are unsatisfactory on the whole, although having some advantages.

Referring to Figure 3 of the accompanying drawings, which illustrates the hysteresis loss of these braided structures in the relation between contractive forces and contraction coefficients in actuators operated in response to inner pressures, there is apparent a difference between a decreasing rate of the contractive forces in increasing the contraction coefficients and an increasing rate of the contractive forces in decreasing the contraction coefficients. The difference is illustrated by a triangular area surrounded by lines having arrows in the graph of Figure 3.

EP—A—0146261 discloses an actuator which has a first connection point and a second connection point at opposite ends and is contractable along an axis extending between the connection points. The actuator has at least one hollow enclosure with an opening for admitting a pressurized fluid. A simultaneously radially expandable, axially contractable constraining means cooperates with the enclosure. The constraining means converts radial expansion of the actuator into axial contraction when pressurized fluid is admitted into the enclosure. In a preferred form, the constraining means comprises a network of nonstretchable flexible tension links.

DE—C—503775 discloses an apparatus for generating high or low pressure in gases or fluids by altering the shape of the space surrounding them, which is characterised in that an elastically deformable tube is reinforced by another tube which is assembled from in elastic fibres or bands, eg of metal, in such a way that articulated polygons arise with a diagonal in the direction of the tube axis.

The present invention aims to provide an improved actuator for use in robots or manipulators, which eliminates or at least mitigates the disadvantages of the prior art.

The invention also aims to provide a pneumatic actuator capable of reproducing contractive forces and contraction coefficients with high power with high accuracy by eliminating hysteresis loss of the actuator.

The invention further aims to provide an actuator which exhibits high accuracy response even if operating pressure is low, thereby easily controlling positions and forces for robots and manipulators.

The present invention provides an actuator including a thin-walled inner cylinder made of an elastic material, preferably a rubber or rubber-like elastic material, and an extensible and contractible reinforcing braided structure surrounding the inner cylinder, the actuator being contractible in its axial direction to obtain contractive force when pressurized fluid is supplied into the inner cylinder to expand it in its radial direction, while changing the braided angles of the said braided structure, characterized in that the braided structure is made of a knotless net which comprises a first group of parallel strands and a second group of parallel strands intersecting the said first group of parallel strands, and in that a lubricant is applied to the intersections of the said groups of strands.

In a preferred embodiment of the invention, the intersections of strands of the knotless net are coated or impregnated with a lubricant, thereby more effectively decreasing the hysteresis loss in the pantograph movement.

The invention will be further described, by way of example only, with reference to Figure 4 of the accompanying drawings, which is a partial view of a braided structure used for an actuator according to the invention.

Figure 4 illustrates a knotless net of the invention on an enlarged scale. The passing-through type knotless net 18 shown in Figure 4 consists of a first number of parallel strands and a second number of parallel strands intersecting the first mentioned parallel strands. In the embodiment, yarns are twisted to form the respective strands and at the same time two respective strands adjoining each other are jointed to form meshes of the net.

Accordingly, any frictional resistance does not occur due to the transformation of mesh patterns in pantograph movements of the strands, or changing braided angles.

In the embodiment, intersections 19 of the strands are preferably coated or impregnated with a lubricant, thereby more effectively and considerably decreasing the hysteresis loss in the pantograph movement.

Openings of the meshes of the knotless net are preferably not more than 6×6 mm, more preferably of the order of 2×2 mm, to obtain the satisfactory function of an actuator. In use, a braided structure of a knotless net as above described according to the invention is stretched to an initial status such that acute angles made by adjoining strands are not more than 40° or braided angles θ are not more than 20°, for example 10—5°. The braided structure under such an initial status is then arranged on a thin-walled inner cylinder 1. With this arrangement, the braided structure ensures positive contractive forces caused in an actuator equipped with this braided structure without any displacement of the intersections 19, any disturbance of the braided patterns and any slack of strands of the braided structure.

In one practical example, strands having diameters of 12 mm consisting of thirty-four polyester yarns of 3,000 d/2 were braided to form reinforcing braided structures of a knotless net according to the invention, which were then arranged with braided angles of 5° on thin-walled inner cylinders having outer diameters of 11.4 mm and wall thicknesses of 1 mm to form actuators. With such actuators, it has been found that high power can be easily obtained which is more than 100 times that of pneumatic cylinders having the same diameters as those of the actuators.

As can be seen from the above description, the actuator having the reinforcing braided structure according to the invention can reproduce contractive forces and contraction coefficients with high power and with high accuracy in response to operating pressure, as a result of eliminating the hysteresis loss of the actuator, and therefore the actuator according to the invention exhibits high accuracy response even if the operating pressure is low. Accordingly, when the actuators according to the invention are used in operating elements for robots and manipulators, control of positions and forces for them can be very easily effected.

**Claims**

1. An actuator including a thin-walled inner cylinder (1) made of an elastic material and an extensible and contractible reinforcing braided structure (2) surrounding the said inner cylinder, the said actuator being contractible in its axial direction to obtain contractive force when pressurized fluid is supplied into the inner cylinder to expand it in its radial direction, while changing the braided angles of the said braided structure, characterized in that the said braided structure is made of a knotless net (18) which comprises a first group of parallel strands and a second group of parallel strands intersecting the said first group of parallel strands, and in that a lubricant is applied to the intersections (19) of the said groups of strands.

2. An actuator as claimed in claim 1, characterized in that the said intersections of strands of the said knotless net are coated with a lubricant.

3. An actuator as claimed in claim 1, characterized in that the said intersections of strands of the said knotless net are impregnated with a lubricant.

**Patentansprüche**

1. Betätigungseinrichtung mit einem dünnwandigen inneren Zylinder (1) aus elastischem Material und einer ausdehnbaren sowie zusammenziehbaren, verstärkten, geflochtenen Einrichtung (2), welche den inneren Zylinder umgibt, wobei die Betätigungseinrichtung in ihrer Axialrichtung zusammenziehbar ist, um eine Zusammenziehkraft zu erhalten, wenn ein unter Druck stehendes Fluid in den inneren Zylinder eingegeben wird, um diesen in radialer Richtung zu expandieren, wobei die Flecht-Winkel der geflochtenen Einrichtung geändert werden, dadurch gekennzeichnet, daß die geflochtene Einrichtung aus einem knotenlosen Netz (18) hergestellt ist, welches eine erste Gruppe von parallelen Strängen und eine zweiten Gruppe von parallelen Strängen aufweist, wobei letztere die parallelen Stränge der ersten Gruppe schneiden, und das ein Schmiermittel an den Schnittpunkten (19) der genannten Gruppen von Strängen aufgebracht ist.

2. Betätigungseinrichtung nach Anspruch 1, dadurch gekennzeichnet, daß die Schnittpunkte der Stränge des genannten knotenlosen Netzes mit einem Schmiermittel beschichtet sind.

3. Betätigungseinrichtung nach Anspruch 1, dadurch gekennzeichnet, daß die Schnittpunkte der Stränge des genannten knotenlosen Netzes mit einem Schmiermittel imprägniert sind.

**Revendications**

1. Un vérin comportant un cylindre interne à paroi mince (1) formé d'un matériau élastique et d'une structure de renforcement, dilatable et contractable (2) entourant ledi cylindre interne, ledit vérin étant contractable dans sa direction axiale pour obtenir une force de contraction lorsque le fluide sous pression est mis dans le cylindre interne pour le dilater dans sa direction radiale, en modifiant les angles de tressage de ladite structure tressée, caractérisé en ce que ladite structure tressée est constituée d'un tulle sans noeud (18) qui comprend un premier groupe de fils parallèles et d'un second groupe de fils parallèles entrecroisant ledit premier groupe de fils parallèles, et en ce que le lubrifiant est appliqué aux intersections (19) desdits groupes de fils.

7

8

0 161 750

2. Un vérin tel que revendiqué dans la revendication 1, caractérisé en ce que lesdits intersections des fils dudit tulle sans noeud sont revêtues d'un lubrifiant.

3. Un vérin tel que revendiqué dans la revendication 1, caractérisé en ce que lesdites intersections des fils dudit tulle sans noeud sont imprégnées d'un lubrifiant.

## FIG. 1

**FIG_2a**
PRIOR ART

**FIG_2b**
PRIOR ART

**FIG_2c**
PRIOR ART

**FIG_3**

**FIG_4**